# EUROPÄISCHE PATENTSCHRIFT

(11) **EP 2 156 154 B1**
(45) Veröffentlichungstag und Bekanntmachung des Hinweises auf die Patenterteilung: **10.08.2016**
(21) Anmeldenummer: 08801454.3
(22) Anmeldetag: 06.06.2008
(51) Int. Cl.: G01J 3/02, G01J 3/04, G01J 3/18, G01J 3/28, G01J 3/36, G01J 3/443

(54) **SPEKTROMETER MIT FESTKÖRPERSENSOREN UND SEKUNDÄRELEKTRONENVERVIELFACHERN**
SPECTROMETER COMPRISING SOLID BODY SENSORS AND SECONDARY ELECTRON MULTIPLIERS
SPECTROMÈTRE DOTÉ DE CAPTEURS SOLIDES ET DE MULTIPLICATEURS D'ÉLECTRONS SECONDAIRES

(30) Priorität: 08.06.2007 DE 102007027008
(43) Veröffentlichungstag der Anmeldung: 24.02.2010
(73) Patentinhaber: Spectro Analytical Instruments GmbH, 47533 Kleve (DE)
(72) Erfinder: BOHLE, Wolfram, 47533 Kleve (DE); HEYNEN, Ulrich, 47546 Kalkar (DE)
(74) Vertreter: Lenzing Gerber Stute
(86) Internationale Anmeldenummer: PCT/EP2008/004529
(87) Internationale Veröffentlichungsnummer: WO 2008/148562

(56) Entgegenhaltungen:
- EP-A- 0 432 842
- EP-A1- 0 083 573
- EP-A1- 0 711 993
- XIAO MING ET AL: "An improved instrument for measuring time-resolved lanthanide emission and resonance energy transfer" REVIEW OF SCIENTIFIC INSTRUMENTS, AIP, MELVILLE, NY, US, Bd. 70, Nr. 10, 1. Oktober 1999 (1999-10-01), Seiten 3877-3881, XP012037116 ISSN: 0034-6748
- SLICKERS K: 'Spektralapparat', 01 Januar 1992, DIE AUTOMATISCHE ATOM-EMISSIONS-SPEKTRALANALYSE Seiten 161 - 213, XP007923224

## Beschreibung

Die vorliegende Erfindung betrifft ein Spektrometer zur Untersuchung der optischen Emission einer Probe mittels gepulster Anregung.

Zur Anregung einer im Allgemeinen metallischen Probe wird zwischen der Probe und einer Elektrode eine Funkenentladung erzeugt. Die hohe Temperatur in dieser Entladung bewirkt, dass das Material angeregt wird und im optischen Bereich sowie im UV-Bereich charakteristische Strahlung abgibt. Die Strahlung wird dann über ein optisches System nach der Wellenlänge aufgefächert. Sensoren sitzen an den interessierenden Stellen des entstehenden Spektrums, um die Intensität der verschiedenen Spektrallinien ermitteln zu können. Daraus kann dann auf die relativen Anteile der einzelnen chemischen Elemente in der untersuchten Probe geschlossen werden.

Für die Registrierung der Strahlung werden in der Praxis zwei verschiedene Typen von Sensoren eingesetzt. Zum einen werden Festkörpersensoren verwendet, bei denen eine Vielzahl von Pixeln in einer oder mehreren Zeilen angeordnet sind. Diese Zeilen überdecken dabei einen Wellenlängenbereich, so dass neben der einzelnen Spektrallinie auch die "spektrale Umgebung" mit gemessen werden kann. Diese Detektoren sind als CCD-,CMOS- Photodioden- oder CID Arrays ausgeführt. Das Messverfahren kann als ortsauflösend und zeitlich integrierend bezeichnet werden.

Der zweite Typ von Sensoren wird von den Sekundärelektronenvervielfachern gebildet, also beispielsweise von Photomultipliern und Channeltrons. Diese Detektoren erzeugen eine elektrische Ladung proportional zum einfallenden Photonenstrom. Sie sind nicht ortsauflösend, da der gesamte auf die primäre Elektrode fallende Photonenstrom ausgewertet wird. Diese Sensoren sind jedoch zeitlich auflösend, da der Intensitätsverlauf des einfallenden Photonenstroms unmittelbar durch die abgegebene elektrische Ladung wiedergegeben wird. Im Gegensatz zu den Festkörpersensoren kann mit entsprechend schneller Auswerteelektronik eine Zeitauflösung im Bereich von einer Mikrosekunde erzielt werden. Diese beiden Systeme haben jeweils Vor- und Nachteile. Festkörpersensoren bilden die spektrale Umgebung, so dass außer einer möglicherweise gesuchten Linie auch der spektrale Untergrund oder starke, neben der gesuchten Linie vorhandene Spektrallinien mit erfasst und ausgewertet werden können. Die Sekundärelektronenvervielfacher (SEV) haben beispielsweise Vorteile bei Atomlinien, die aufgrund geringerer Übergangswahrscheinlichkeit bei oder unmittelbar nach der Anregung durch den Funken eine geringe Intensität aufweisen und deswegen im Untergrund schlecht zu detektieren sind.

Diese Linien weisen jedoch eine relativ lange Abklingzeit auf, so dass nach dem Ende der Anregung der ersten starken Lichtemission aus diesen langsamen Übergängen noch ein Signal bis zu 100 Mikrosekunden zur Verfügung steht, das dann praktisch frei von Untergrundsignalen aus der Anregung ist. Diese langsamen Übergänge erlauben es, mit den zeitauflösenden SEV-Detektoren gerade diese Linien besonders gut zu bestimmen.

In der Praxis werden diese beiden Messverfahren mit unterschiedlichen Spektrometern ausgeführt, die entweder Festkörpersensoren oder Sekundärelektronenvervielfacher als Detektoren aufweisen. Spektrometer mit beiden Detektortypen gibt es aus verschiedenen Gründen nicht.

Aus der Patentanmeldung DE 19853754A1 ist ein Spektrometer für die Emissionsspektroskopie von ICP-Plasmen bekannt, also für Lichtquellen, die im Dauerbetrieb arbeiten. Zwei Spektren mit unterschiedlichem Wellenlängenbereich werden auf deckungsgleichen Fokalkurven, d.h. am gleichen Ort, erzeugt. Die Spektren werden ortsaufgelöst mit einem Ensemble von Halbleiterzeilensensoren erfasst. Der technische Schwerpunkt in diesem Dokument ist die simultane Erzeugung zweier Spektren mit im Wesentlichen unterschiedlichem Wellenlängenbereich auf dem deckungsgleichen (also orts-gleichen)Fokalkreis zweier Gitter, wobei das Licht über einen einzigen Eintrittspalt nur auf das erste Gitter fällt und das zweite Gitter das Licht aus 0. Beugungsordnung des ersten Gitters erhält.

Photomultiplier kommen in diesem Spektrometer nicht zum Einsatz, da sie bei der Spektroskopie von kontinuierlichen Lichtquellen keine Vorteile gegenüber den verwendeten CCD-Arrays haben. In dem Dokument werden sie dennoch optional als Strahlungsdetektoren mit erwähnt. Es ist jedoch nicht offenbart, dass eine gleichzeitige Verwendung beider Detektoren möglich und vorteilhaft ist. Das Dokument befasst sich auch nicht mit der zeitaufgelösten Spektroskopie gepulster Quellen.

Weitere relevante Dokumente zur Emissionsspektroskopie sind die Patentaumeldung EP0083573 und das Lehrbuch von Karl Slickers: "Die automatische Atom-Emissions - Spektralanalyse (2. Ausgabe Gießen 1992).

Es ist deshalb Aufgabe der vorliegenden Erfindung, einen Spektrometer zur Verfügung zu stellen, bei dem beide Detektortypen eingesetzt werden und damit sowohl ortsauflösende als auch Zeit auflösende Detektoren zur Verfügung stehen.

Diese Aufgabe wird von einem Spektrometer mit den Merkmalen des Anspruchs 1 gelöst.

Vorteilhaft wird die Emission des anregenden Funkens durch eine gemeinsame Apertur in das Spektrometer geleitet und dort den beiden Sensorgruppen zugeführt. Dabei ist es möglich, das gesamte Spektrum jeweils beiden Sensorgruppen zuzuführen, wenn für jede Sensorgruppe ein dispersives Element, beispielsweise ein Beugungsgitter, vorgesehen ist. Die räumliche Anordnung der Sensoren beider Gruppen wird bevorzugt in einer Ebene vorgenommen. Dazu kann vorgesehen sein, einen Teil des Spektrums über einen schmalen Spalt und ein dispersives Element auf eine Gruppe von Sensoren zu leiten, während ein zweiter Teil des Spektrums über einen Hilfsspalt mit relativ großer Breite auf einem Umlenkspiegel geleitet wird und von dort durch einen zweiten Spalt auf ein zweites dispersives Element geleitet wird, wo es spektral aufgefächert und zu der zweiten Gruppe von Sensoren geleitet wird.

Schließlich ist es von Vorteil, wenn der zweite Teil des Spektrums von dem Hilfsspalt auf einen ersten Spiegel, von dort durch den zweiten Hauptspalt auf einen zweiten Spiegel geleitet wird, so dass die beiden dispersiven Elemente nahe bei einander liegen können und die Anordnung der Sensorgruppen etwa spiegelbildlich erfolgen kann. Der erste Spiegel kann vorzugsweise zwischen den beiden dispersiven Elementen angeordnet sein.

Das neue Spektrometer wurde speziell für die Funkenspektrometrie mit dem Ziel entwickelt, sowohl die Vorteile der Photomultiplier hinsichtlich der Realisierung zeitaufgelöster Messung einzelner Spektrallinien, als auch die Vorteile der CCD/CMOS-Arraysensoren hinsichtlich der Realisierung ortsaufgelöster Messung über große Spektralbereiche im gleichen System und simultan zu nutzen.

Es sind zwei Spektralmodule vorgesehen, d.h. es werden zwei Spektren simultan von zwei Gittern erzeugt, jedoch werden diese beiden Gitter unabhängig von einander betrieben, d.h. das eine Gitter erhält im Gegensatz zum Stand der Technik kein Licht von dem anderen Gitter in nullter Ordnung. Die Gitter sollen jedes für sich das Spektrum der Quelle erzeugen.

Die Fokalkurven der beiden Gitter liegen zwar in einer Ebene, sind aber voneinander getrennt. Es gibt an keiner Stelle eine Berührung oder Überschneidung. Die beiden Spektren entstehen an verschiedenen Orten.

Ein weiterer wesentlicher Vorteil des neuen Spektrometers zum Stand der Technik besteht in der Strahlführung des Lichts auf die Gitter. Jedes der beiden Gitter erhält Licht aus demselben und einzigen Interface zur Strahlungseinkopplung in das Spektrometer. Das Interface besteht aus zwei im Abstand neben einander liegenden Spalten unterschiedlicher Breite. Das Licht von dem schmalen Spalt gelangt über einen Ablenkspiegel dicht hinter dem Spalt direkt auf das erste Gitter. Er dient somit als Eintrittspalt für das erste Spektralmodul. Das Licht vom breiten Spalt wird von einem Hohlspiegel auf einen weiteren schmalen Spalt im Inneren des Spektrometers abgebildet. Dieser sekundäre Spalt dient als Eintrittspalt für das zweite Spektralmodul. Auf diese Weise können beide Spektralmodule spiegelbildlich platzsparend nebeneinander angeordnet werden.

Wesentlich bei dem neuen Spektrometer ist die doppelte simultane Erzeugung des Spektrums einer gepulst betriebenen Strahlungsquelle mit im Wesentlichen gleichem Wellenlängenbereich mit zwei optisch unabhängigen Spektralmodulen (Gittern) in einer gemeinsamen Rahmenstruktur mit einem gemeinsamen Interface zur Lichteinkopplung, wobei im ersten Spektralmodul das Spektrum ortsaufgelöst breitbandig mit Halbleiter-Array-Detektoren erfasst wird und simultan im zweiten Spektralmodul beliebige diskrete Wellenlängen zeitaufgelöst mit Photomultipliern gemessen werden.

Nachfolgend wird die Erfindung anhand der Zeichnung näher beschrieben. Es zeigt:

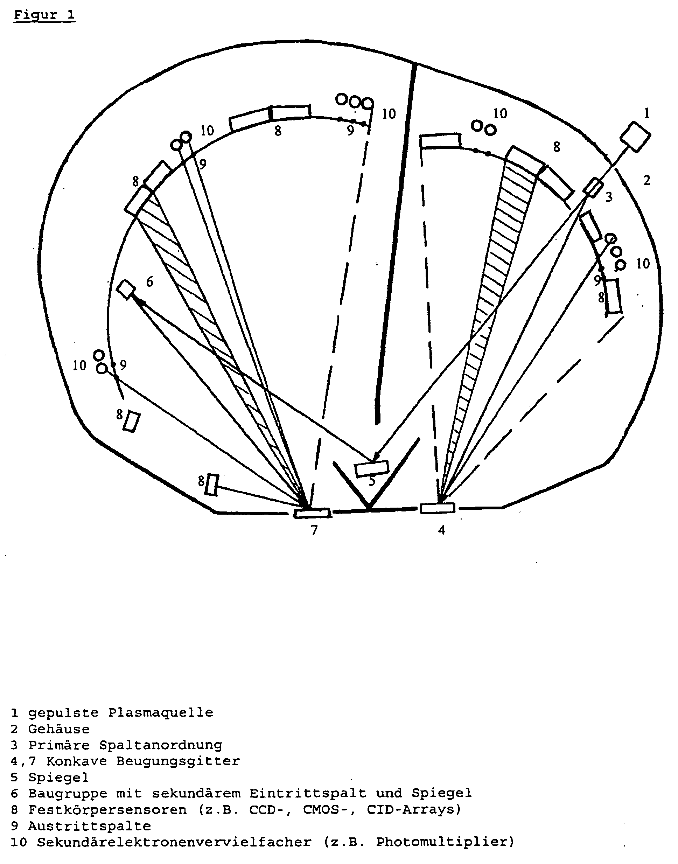

Figur 1: einen schematischen Strahlengang eines erfindungsgemäßen Spektrometers in einer Draufsicht auf die Hauptebene.

Die Figur 1 zeigt in einer schematischen Darstellung ein Spektrometer mit gepulster Plasmaquelle in Form eines Funkens 1, der zwischen einer Elektrode und einer zu untersuchenden Probe erzeugt wird. Die Plasmaquelle ist mit einer Frequenz von etwa 300 - 1000 Hz gepulst, wobei die Standzeit eines einzelnen Funkens etwa 100 Mikrosekunden beträgt.

Die während und nach der Anregung entstehende optische Emission tritt durch eine Spaltanordnung 3 in ein Gehäuse 2 ein, in dem sich die Spektrometeroptik befindet. Es ist zu unterscheiden zwischen einem ersten Strahlengang und einem zweiten Strahlengang, die als durchgezogenen Linien dargestellt sind.

Der erste Strahlengang verläuft von einem schmalen ersten Eintrittsspalt in der Spaltanordnung 3 zu einem ersten Gitter 4, welches das auftreffende Licht spektral auffächert und den Spalt auf eine Anzahl von Festkörpersensoren 8 abbildet. Die Anordnung von Spalt 3, Gitter 4 und Festkörpersensoren 8 ist eine so genannte Paschen-Runge-Anordnung, die an sich bekannt ist. Die Festkörpersensoren 8 sind auf dem Fokalkreis des Gitters 4 angeordnet. Zur Intensivierung des Signals können vor den Festkörpersensoren zylindrische Spiegel verwendet werden, wie im Patent FR 99 14572 und US6,614,528 beschrieben.

Der zweite Strahlengang beginnt bei einem zweiten Spalt in der Spaltanordnung 3. Dieser zweite Spalt ist wesentlich breiter als der erste Spalt. Während der erste Spalt etwa 10 bis 20 Mikrometer breit ist, weist dieser Spalt eine Breite von 250 bis 400 Mikrometer auf. Der zweite Spalt lässt also wesentlich mehr Licht in den zweiten Strahlengang eintreten. Das Licht fällt zunächst auf einen ersten Spiegel 5, von dem aus es umgelenkt wird auf einen sekundären Spalt in der Baugruppe 6. Der Spalt in Baugruppe 6 weist eine Breite von 10 bis 20 Mikrometern auf. Das aus diesem Spalt austretende Licht wird dann über einen weiteren Spiegel in der Baugruppe 6 auf ein zweites Gitter 7 geleitet, welches das Licht spektral auffächert und an eine Anzahl von Photomultipliern 10 weiter leitet, die auf der Fokalkurve des zweiten Gitters 7 angeordnet sind. Bis auf die Umlenkung durch die Spiegelanordnungen 5 und 6 entspricht auch der zweite Strahlengang einer Paschen-Runge-Anordnung. Das Licht des zweiten Strahlengangs wird insbesondere nicht von dem ersten Gitter in nullter Ordnung reflektiert. Es trifft vorzugsweise nicht auf das erste Gitter.

Die Emission des Funkens 1 und des dadurch erzeugten Plasmas kann durch den zweiten Strahlengang nun ebenso mit den Photomultipliern 10 spektral analysiert werden, wie das in dem ersten Strahlengang auf die Festkörpersensoren 8 geleitete Licht. Die Photomultiplier 10 sitzen ihrerseits an bestimmten Stellen des Spektrums, an denen sich die für die Untersuchung der Probe wesentlichen Spektrallinien befinden. Unmittelbar vor den Photomultipliern 10 sind weitere schmale Spalte 9 angebracht, die unmittelbar neben den Spektrallinien liegende Anteile ausblenden. Dies ist im Gegensatz zu den Festkörpersensoren 8 erforderlich, weil die Sekundärelektronenvervielfacher 10 nicht ortsauflösend sind.

Mit der beschriebenen Anordnung kann nun einerseits das durch den Funken 1 erzeugte Licht in dem Strahlengang, der von dem ersten Spalt über das erste Gitter 4 zu den Festkörpersensoren 8 verläuft, als Spektrum zeitlich integriert aufgenommen werden. Es wird die gesamte Emission eines Anregungsimpulses aufgenommen. Es kann auch über mehrere Anregungsimpulse integriert werden, so dass die Empfindlichkeit und damit das Signal zu Rauschverhältnis verbessert wird. Außerdem kann wegen der ortsauflösenden Eigenschaften der Festkörpersensoren 8 die spektrale Umgebung um die auszuwertende Linie aufgenommen und ihr Einfluss auf die ausgewertete Linie bewertet werden.

Andererseits kann die gleiche Emission über den zweiten Strahlengang mit Photomultipliern 10 ausgewertet werden. Die Photomultiplier 10 sind dabei geeignet, den zeitlichen Verlauf einer einzelnen Anregung zu erfassen, insbesondere das Abklingen der optischen Emission im Plasma nach Beendigung der Anregung. Eine relativ schwache Spektrallinie, die im Untergrund einer unmittelbar benachbarten, starken Spektrallinie liegt und deshalb mit den Festkörpersensoren 8 nicht auflösbar wäre, kann anhand des zeitlichen Verlaufs möglicherweise identifiziert werden. Hierzu kann der jeweilige Photomultiplier 10 mit einer Auflösung von bis zu einer Mikrosekunde ausgelesen werden, so dass die Emission einer schwachen, langsam abklingenden Linie gegen Ende des Messintervalls deutlich gegenüber dem schnell abklingenden Untergrund einer intensiven, benachbarten Linie hervortritt. Der auszuwertende Zeitraum nach Beendigung des Funkens, der selbst eine Brenndauer von etwa 100 Mikrosekunden aufweist, kann nochmals 25 bis 100 Mikrosekunden betragen. In dieser zeit ist das Signal dann praktisch untergrundfrei.

Durch die beschriebene bauliche Anordnung wird es möglich, die beiden Strahlengänge jeweils in Paschen-Runge-Anordnung in einem Gehäuse und im Wesentlichen in einer optischen Ebene anzuordnen. Diese Anordnung hat den Vorteil, dass eine kompakte mechanische Anordnung mit entsprechender Stabilität gegenüber Verformungen oder Längenänderungen ermöglicht wird. Zum anderen hat die Anordnung der beiden Strahlengänge in einem gemeinsamen Gehäuse und in einer Ebene den Vorteil, dass die Sensoren 8 bzw. 10 in dem flachen, ebenen Gehäuse von beiden Seiten von oberhalb und von unterhalb der Dispersionsebene) zugänglich sind. Auf diese Weise wird es möglich, eine besonders enge Gruppierung der Sensoren 8 und 10 auf der Fokalkurve zu erzielen. Dies ermöglicht das simultane Betreiben von Festkörpersensoren und Sekundärelektronenvervielfachern und somit das parallele Messen des orts- sowie des zeitaufgelösten Signals eines Funkens.

## Patentansprüche

1. Spektrometer zur Untersuchung der optischen Emission einer Probe mittels gepulster Anregung einer optischen spektralen Emission, mit einer Anregungsquelle, einer Spaltanordnung (3), wenigstens einem dispersiven Element und mit Detektoren für das emittierte Spektrum, wobei zwei Strahlengänge mit zwei dispersiven Elementen (4, 7) vorgesehen sind, von denen das erste dispersive Element das Spektrum der Emission auf eine Anzahl ortsauflösender Detektoren abbildet und das zweite dispersive Element das Spektrum der Emission auf eine Anzahl zeitauflösender Detektoren abbildet, **dadurch gekennzeichnet, dass**
- Licht in dem ersten Strahlengang von einem ersten Eintrittsspalt in der Spaltanordnung (3) zu einem ersten Gitter (4) verläuft, welches das auftreffende Licht spektral auffächert und den Spalt auf die ortsauflösenden Detektoren abbildet,
- und dass Licht simultan in dem zweiten Strahlengang von einem zweiten Eintrittsspalt in der Spaltanordnung (3) zu einem zweiten Gitter (7) verläuft, welches das Licht spektral auffächert und auf die zeitauflösenden Detektoren (10) zur Erfassung des zeitlichen Verlaufs einer einzelnen Anregung abbildet, wobei
- ein Strahlengang, der erste oder der zweite Strahlengang, über wenigstens einen Umlenkspiegel (5) und eine einen Spalt und einen Umlenkspiegel aufweisende Baugruppe (6) geführt ist.

2. Spektrometer nach Anspruch 1, **dadurch gekennzeichnet, dass** die ortauflösenden Detektoren Festkörperdetektoren, insbesondere CCD-Arrays sind.

3. Spektrometer nach einem der vorhergehenden Ansprüche, **dadurch gekennzeichnet, dass** die zeitauflösenden Detektoren Sekundärelektronenvervielfacher, insbesondere Photomultiplier oder Channeltrons sind.

4. Spektrometer nach einem der vorhergehenden Ansprüche, **dadurch gekennzeichnet, dass** die beiden Strahlengänge im wesentlichen in einer Ebene liegen.

5. Spektrometer nach einem der vorhergehenden Ansprüche, **dadurch gekennzeichnet, dass** der Strahlengang einen ersten breiten Spalt und einen zweiten schmalen Spalt aufweist, wobei der erste Spalt zwischen der Anregungsquelle und dem ersten Umlenkspiegel und dem dispersiven Element liegt.

6. Spektrometer nach einem der vorhergehenden Ansprüche, **dadurch gekennzeichnet, dass** die Anordnung der beiden Strahlengänge jeweils einer Paschen-Runge-Anordnung entspricht.

7. Spektrometer nach einem der vorhergehenden Ansprüche, **dadurch gekennzeichnet, dass** der erste Strahlengang nicht über das zweite dispersive Element verläuft und dass der zweite Strahlengang nicht über das erste dispersive Element verläuft.

## Claims

1. Spectrometer for the examination of the optical emission of a sample by means of pulsed excitation of an optical spectral emission, having an excitation source, a slit arrangement (3), at least one dispersive element and having detectors for the emitted spectrum, wherein two beam paths having two dispersive elements (4, 7) are provided, of which the first dispersive element maps the spectrum of the emission onto a number of spatially resolving detectors and the second dispersive element maps the spectrum of the emission onto a number of time resolving detectors, **characterised in that**
- light runs in the first beam path from a first entry slit in the slit arrangement (3) to a first grating (4) which spectrally fans the incident light and maps the slit onto the spatially resolving detectors,
- and **in that** light simultaneously runs in the second beam path from a second entry slit in the slit arrangement (3) to a second grating (7) which spectrally fans the light and maps it onto the time resolving detectors (10) to detect the course over time of a single excitation, wherein
- a beam path, the first or second beam path, is guided via at least one deflection mirror (5) and an assembly (6) comprising a gap and a deflection mirror.

2. Spectrometer according to Claim 1, **characterised in that** the spatially resolving detectors are solid state detectors, in particular CCD arrays.

3. Spectrometer according to either of the preceding claims, **characterised in that** the time resolving detectors are secondary electron multipliers, in particular photomultipliers or channeltrons.

4. Spectrometer according to any one of the preceding claims, **characterised in that** the two beam paths are located substantially in one plane.

5. Spectrometer according to any one of the preceding claims, **characterised in that** the beam path has a first wide slit and a second narrow slit, wherein the first slit is located between the excitation source and the first deflection mirror and the dispersive element.

6. Spectrometer according to any one of the preceding claims, **characterised in that** the arrangement of the two beam paths corresponds to a Paschen-Runge arrangement in each case.

7. Spectrometer according to any one of the preceding claims, **characterised in that** the first beam path does not run via the second dispersive element and that the second beam path does not run via the first dispersive element.

## Revendications

1. Spectromètre permettant d'analyser l'émission optique d'un échantillon par excitation pulsée d'une émission spectrale optique, qui comprend une source d'excitation, un système de fentes (3), au moins un élément dispersif et des détecteurs pour le spectre émis, auquel cas l'on prévoit deux trajets optiques avec deux éléments dispersifs (4, 7), le premier élément dispersif reproduisant le spectre de l'émission sur une pluralité de détecteurs à résolution spatiale et le second élément dispersif reproduisant le spectre de l'émission sur une pluralité de détecteurs à résolution temporelle, **caractérisé en ce que**
- la lumière dans le premier trajet optique s'étend d'une première fente d'entrée dans le système de fentes (3) à une première grille (4), laquelle répand, de manière spectrale, la lumière incidente et reproduit la fente sur les détecteurs à résolution spatiale,
- et que la lumière, simultanément, dans le deuxième trajet optique s'étend d'une deuxième fente d'entrée dans le système de fentes (3) à une deuxième grille (7), laquelle répand, de manière spectrale, la lumière incidente et reproduit la fente sur les détecteurs à résolution temporelle (10) pour saisir le déroulement temporel d'un seule excitation, auquel cas
- un trajet optique, le premier ou le deuxième trajet optique, est guidé par au moins un miroir de renvoi (5) et un groupe d'assemblage (6) comportant une fente et un miroir de renvoi.

2. Spectromètre selon la revendication 1, **caractérisé en ce que** les détecteurs à résolution spatiale sont des détecteurs solides, en particulier un détecteur à matrice CCD.

3. Spectromètre selon une des revendications précédentes, **caractérisé en ce que** les détecteurs à résolution temporelle sont des multiplicateurs d'électrons secondaires, en particulier des photomultiplicateurs ou channeltrons.

4. Spectromètre selon une des revendications précédentes, **caractérisé en ce que** les deux trajets optiques sont situés, en substance, dans un même plan.

5. Spectromètre selon une des revendications précédentes, **caractérisé en ce que** le trajet optique présente une première fente large et une deuxième fente mince, auquel cas la première fente est située entre la source d'excitation et le premier miroir de renvoi et l'élément dispersif.

6. Spectromètre selon une des revendications précédentes, **caractérisé en ce que** la configuration des deux trajets optiques correspond à chaque fois à une configuration Paschen-Runge.

7. Spectromètre selon une des revendications précédentes, **caractérisé en ce que** le premier trajet optique ne s'étend pas au-dessus du deuxième élément dispersif et que le deuxième trajet optique ne s'étend pas au-dessus du premier élément dispersif.
